# EUROPÄISCHE PATENTANMELDUNG

(11) **EP 0 586 944 A1**
(43) Veröffentlichungstag der Anmeldung: **16.03.1994**
(21) Anmeldenummer: 93113251.8
(22) Anmeldetag: 19.08.1993
(51) Int. Cl.: F16L 5/02, H02G 3/22

(54) **Rohr-Dichtungseinsatz mit Zentriereinrichtung**

(30) Priorität: 05.09.1992 DE 9211978 U
(71) Anmelder: DOYMA ROHRDURCHFÜHRUNGSTECHNIK HANS-ULLRICH IHLENFELDT, D-28871 Oyten (DE)
(72) Erfinder: Ihlenfeldt, Hans Ullrich, D-28871 Oyten (DE)
(74) Vertreter: Eisenführ, Speiser & Partner

(57) **Zusammenfassung**

Beschrieben wird ein Rohr-Dichtungseinsatz mit Zentriereinrichtung, insbesondere für Medienrohre, mit einem elastischen Dichtelement 3, welches zwischen zwei Druckplatten 1, 2 angeordnet und von den Druckplatten 1, 2 durch Pressung verformbar ist. Die Druckplatten 1, 2 und das Dichtelement 3 weisen Durchführungen 41, 42 auf. Die Zentriereinrichtung ist eine in den Rohr-Dichtungseinsatz fest integrierte, im wesentlich parallel zu den Druckplatten 1, 2 angeordnete und mit einer Durchführung 43 versehene Stützplatte 5.

## Beschreibung

Die Erfindung betrifft einen Rohr-Dichtungseinsatz mit Zentriereinrichtung, insbesondere für Medienrohre, gemäß dem Oberbegriff von Anspruch 1.

Rohr-Dichtungseinsätze (nachfolgend kurz "Dichtungseinsätze") sind bekannt. Sie bestehen im allgemeinen aus einem elastisch verformbaren Dichtelement, welches Durchführungen . für Medienrohre aufweist und zwischen Druckplatten angeordnet ist. Beim Einbau wird der Dichtungseinsatz beispielsweise in ein Futterrohr eines Wanddurchbruchs in einem Gebäude eingeschoben, das Medienrohr durch eine Durchführung hindurchgeschoben und das elastisch verformbare Dichtelement mit Hilfe der Druckplatten zusammengepreßt. Beim Zusammenpressen beginnt das Material des Dichtelements nach innen und außen zu fließen und verkeilt einerseits das Dichtelement im Futterrohr und andererseits das Medienrohr in der Durchführung. Unter einem "Medienrohr" wird dabei beispielsweise eine Rohrleitung verstanden, durch die Kabel für die Elektro- oder TV-Versorgung geführt werden.

Die bekannten Dichtungseinsätze haben eine Reihe von Nachteilen, weil bei ihnen meist nur in unbefriedigender Weise für eine Zentrierung des Dichtungseinsatzes im Futterrohr gesorgt ist. Ein Zentrieren des Dichtungseinsatzes ist erforderlich, damit beispielsweise ein vom Dichtungseinsatz getragenes Medienrohr dauernd fixiert ist und keine größeren Bewegungen ausführen kann. Bewegungen dieser Art können auftreten, wenn das Medienrohr sich senkt oder durch vorhandenes Wasser aufschwimmt, oder wenn es abgewinkelt werden muß. Im Falle einer Senkung drückt das Dichtelement nach unten, wodurch sein Material von oben nach unten abfließt und sich von der Dichtungsstelle im Futterrohr löst. Dadurch können Leckagen entstehen, die beispielsweise Wasser oder Gas eindringen lassen.

Zur Lösung des Zentrierproblems wurden sogenannte "Zentrierkufen" vorgeschlagen. Dabei handelt es sich um eine Vorrichtung, die im wesentlichen aus zwei Halbschalen aufgebaut ist, die auf das Medienrohr aufgesetzt und zu einer scheibenartigen Einheit vereinigt werden können. Auf den Kalbschalen sind Abstandshalter angebracht, die radial nach außen weisen und die scheibenartige Einheit nach Art eines Strahlenkranzes umgeben. Die Länge der Abstandshalter ist so bemessen, daß sie am Futterrohr anstoßen und auf diese Weise einen überall gleich großen Abstand des Medienrohrs vom Futterrohr sicherstellen.

Diese Zentrierkufen sind technisch aufwendig und daher teuer. Sie erfordern außerdem einen zusätzlichen Montageschritt, der zudem beim Einbau leicht vergessen wird, womit das Problem der Zentrierung nur unbefriedigend gelöst ist.

Die Erfindung stellt sich die Aufgabe, die vorerwähnten Nachteile des Standes der Technik zu beseitigen und insbesondere einen Dichtungseinsatz mit einer Zentriereinrichtung zur Verfügung zu stellen, mit dessen Hilfe die Zentrierung ohne aufwendiges Sonderzubehör und insbesondere ohne separaten Montageschritt erreicht wird. Ein Aspekt dieser Aufgabe ist das Sichern des Dichtungseinsatzes gegen eine versehentlich nicht angebrachte Zentriereinrichtung.

Diese Aufgabe wird bei einem Rohr-Dichtungseinsatz der eingangs erwähnten Art gelöst durch die Merkmale des kennzeichnenden Teils von Anspruch 1.

Die Erfindung geht von dem Gedanken aus, daß zur Lösung dieser Aufgabe eine neue und bessere Lösung für das technische Problem gefunden werden muß, die Dichtungsfunktion von der Tragefunktion zu entkoppeln. Sie verwendet deshalb einen Rohr-Dichtungseinsatz mit einer Zentriereinrichtung, die in den Dichtungseinsatz fest integriert ist und von einer im wesentlichen parallel zu den Druckplatten und zum Dichtelement angeordneten Stützplatte gebildet wird. Die Stützplatte weist wie das Dichtelement und die Druckplatten Durchführungen auf, durch die beispielsweise Medienrohre geführt werden können.

Die im wesentlichen parallel zu den Druckplatten und zum Dichtelement angeordnete Stützplatte begrenzt eine unerwünschte vertikale Bewegung des Medienrohrs und damit des Dichtelements. Damit wird die gestellte Aufgabe gelöst, weil das Material des Dichtelements nicht mehr ungehindert nach unten fließen und sich dabei von der Dichtungsstelle im Rohr ablösen kann.

Aus praktischen Gründen kann es jedoch erwünscht sein, dem Dichtelement eine gewisse Bewegungsfreiheit zu belassen. Aus diesem Grund sind bei einer bevorzugten Ausführungsform der Erfindung die Druckplatten, das Dichtelement und die Stützplatte als Scheiben ausgebildet, die als Durchführungen zentrische Bohrungen aufweisen, und der äußere Durchmesser der Stützplatte ist gleich groß wie oder nur geringfügig kleiner als der Durchmesser des Dichtelements und/ oder der Durchmesser der Bohrung der Stützplatte ist gleich groß oder nur geringfügig kleiner oder größer als der Durchmesser der Bohrung des Dichtelements. Durch diese Dimensionierung entsteht zwischen der Stützplatte und dem durchgeführten Rohr und/oder zwischen der Stützplatte und dem Futterrohr ein Spiel, welches eine gewisse Mindestbeweglichkeit des Systems in vertikaler Richtung erlaubt. Der Begriff "geringfügig kleiner als" bzw. "geringfügig größer als" ist dabei so zu verstehen, daß nach dem Pressen unter Berücksichtigung der dabei erfolgenden Verformung des Dichtelements das Spiel im gewünschten Ausmaß vorhanden ist. Da dem Fachmann die dauerelastischen Verformungseigenschaften von für das Dichtelement in Frage kommenden Materialien (insbesondere von elastomeren Kunststoffen) bekannt sind, kann er die Dimensionierung in einfacher Weise festlegen.

Als Material für das Dichtelement erfindungsgemäßer Rohr-Dichtungseinsätze eignen sich z.B. Elastomere nach DIN 7724, insbesondere durch Vulkanisation vernetzte natürliche oder synthetische Kautschuke.

Bei einer anderen bevorzugten Ausführungsform der Erfindung ist das Dichtelement in zwei Halb-Dichtelemente geteilt, und die Stützplatte ist zwischen den beiden Halb-Dichtelementen angeordnet. Diese Ausführungsform hat den Vorteil, daß die eine Bewegung des Dichtungseinsatzes verhindernde bzw. begrenzende Kraft mittig im Dichtungseinsatz angreift.

Es sind kann jedoch auch wünschenswert sein, daß diese Kraft nicht mittig im Dichtungseinsatz, sondern an einer Seite des Dichtelements angreift. Gemäß einer anderen Ausführungsform der Erfindung ist die Stützplatte deshalb zwischen dem Dichtelement und einer Druckplatte angeordnet. Die Stützplatte kann dabei mit dieser Druckplatte einstückig verbunden sein.

Jede der vorstehend beschriebenen Ausführungsformen löst den Aspekt der gestellten Aufgabe, den Dichtungseinsatz gegen eine versehentlich nicht angebrachte Zentriereinrichtung zu schützen; da die als Zentriereinrichtung verwendete Stützplatte fest in den Dichtungseinsatz integriert ist, kann sie beim Einbau nicht vergessen werden. Ein zusätzlicher Montageschritt entfällt.

Der Aufbau des erfindungsgemäßen Dichtungseinsatzes kann weiter dadurch vereinfacht werden, daß das Dichtelement zwischen einer Druckplatte und der Stützplatte angeordnet ist, wobei eine zweite Druckplatte nicht vorgesehen ist und die Stützplatte die Funktion dieser (weggelassenen) zweiten Druckplatte übernimmt. Es entsteht so ein besonders leicht zu handhabender Aufbau aus nur drei Teilen.

Das Material der Stützplatte wird so gewählt, daß die Stützplatte die auf sie wirkenden Kräfte aufnehmen kann, ohne sich in größerem Ausmaß zu verformen. Bei Ausführungsformen mit zwei Druckplatten werden die zur Verformung des Dichtelements notwendigen Kräfte im wesentlichen von den Druckplatten aufgenommen, so daß eine größere Kraftaufnahme auf die Stützplatte nicht gegeben ist. In diesen Fällen kann die Stützplatte aus einem genügend hartem Kunststoff ausgeführt sein, wie z.B. aus Hart-PVC. Bei Ausführungsformen, bei denen eine zweite Druckplatte nicht vorgesehen ist und die Stützplatte die Funktion dieser weggelasssenen Druckplatte übernimmt, muß die Stützplatte die zur Verformung des Dichtelements erforderlichen Kräfte wenigstens teilweise aufnehmen, so daß sie in diesem Fall ggf. aus einem Metall hergestellt sein muß.

Weitere Vorteile, Merkmale und Anwendungsmöglichkeiten der vorliegenden Erfindung ergeben sich aus der nachfolgenden Beschreibung in Verbindung mit der Zeichnung; es zeigen:
- Fig. 1:: eine Schnittzeichnung einer Ausführungsform des erfindungsgemäßen Rohr-Dichtungseinsatzes;
- Fig. 2 bis 4:: Schnittzeichnungen von Ausführungsformen des erfindungsgemäßen Rohr-Dichtungseinsatzes, die die unterschiedlichen Möglichkeiten des Einbaus der Stützplatte zeigen.

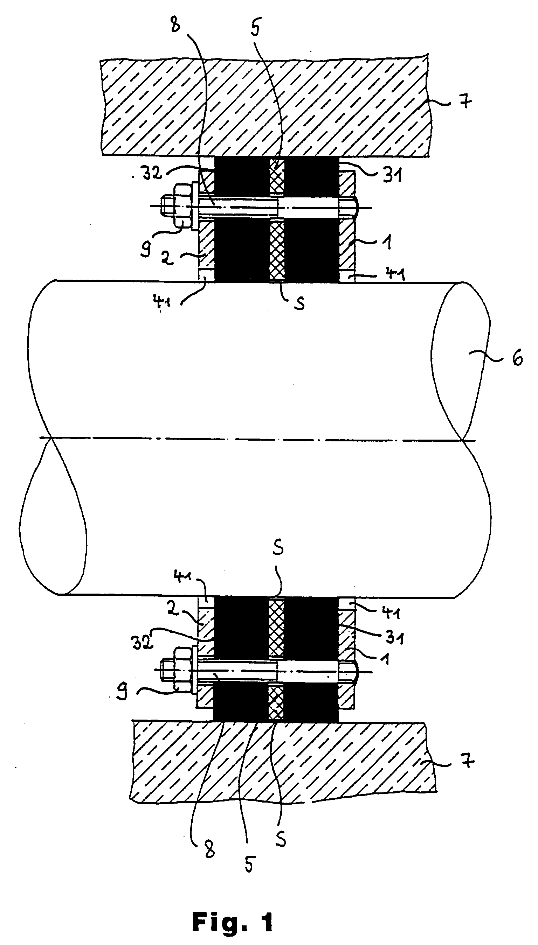

Figur 1 zeigt zwei Druckplatten 1 und 2 mit einem dazwischen angeordneten elastisch verformbaren Dichtelement in Gestalt von zwei Halb-Dichtelementen 31 und 32. Zwischen den Halb-Dichtelementen 31, 32 befindet sich eine Stützplatte 5. Die Druckplatten 1, 2, die Halb-Dichtelemente 31, 32 und die Stützplatte weisen zentrische Bohrungen auf, wobei der Durchmesser der Bohrung der Stützplatte 5 geringfügig größer ist als der Durchmesser der Bohrung des Dichtelements. Weiterhin ist der äußere Durchmesser der Stützplatte 5 geringfügig kleiner als der Durchmesser des Dichtelements, so daß an zwei Stellen ein Spiel S besteht.

Durch die Bohrungen der Druckplatten 1, 2, der Halb-Dichtelemente 31, 32 und der Stützplatte 5 ist ein Medienrohr 6 geführt; der Dichtungseinsatz ist in ein Futterrohr 7 eingebaut. Die Druckplatte 1 weist Stehbolzen 8 auf, die jeweils mit einem Gewinde versehen sind, auf welches zum Zusammenpressen des Dichtelements Schraubenmuttern 9 aufgeschraubt sind.

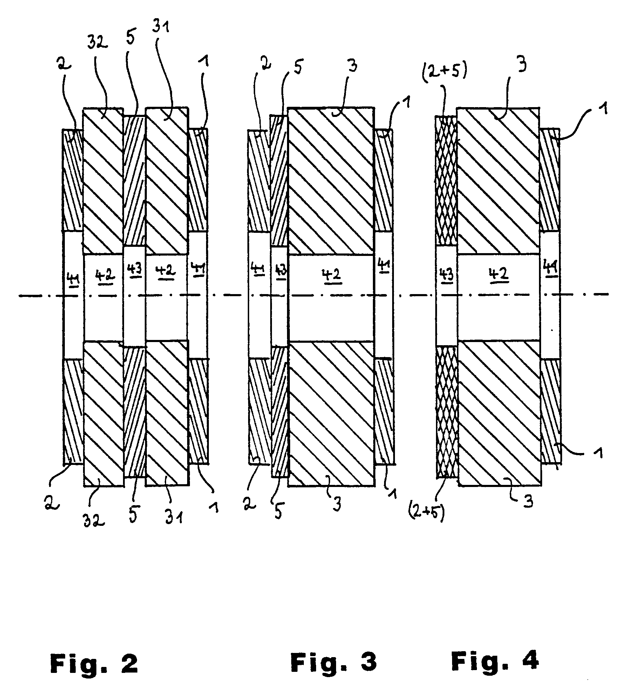

Die Figuren 2 bis 4 zeigen unterschiedliche Möglichkeiten der Anordnung der Stützplatte 5 innerhalb des erfindungsgemäßen Dichtungseinsatzes. Die Ausführung gemäß Figur 2 entspricht in ihrem Aufbau dabei derjenigen von Figur 1 und wird lediglich der Vollständigkeit halber wiederholt.

Figur 3 stellt eine Ausführungsform dar, bei der die Stützplatte 5 zwischen dem Dichtelement 3 und einer Druckplatte 2 angeordnet ist. Die Stützplatte 5 und die Druckplatte 2 können dabei einstückig miteinander verbunden sein.

Figur 4 zeigt eine Ausführungsform, wobei das Dichtelement 3 zwischen einer Druckplatte 1 und einer Stützplatte 2+5 angeordnet ist, wobei die zweite Stützplatte (diese trägt in den vorangegangenen Figuren das Bezugszeichen 2) weggelassen ist und die Stützplatte 2+5 die Funktion dieser weggelassenen Druckplatte übernimmt.

Bei allen in den Figuren 2 bis 4 dargestellten Ausführungsformen ist der äußere Durchmesser der Stützplatte 5 geringfügig kleiner als der Durchmesser des Dichtelements 3, und der Durchmesser der Bohrung 43 der Stützplatte 5 ist geringfügig größer als der Durchmesser der Bohrung 42 des Dichtelements 3.

## Patentansprüche

1. Rohr-Dichtungseinsatz mit Zentriereinrichtung, insbesondere für Medienrohre, mit einem zwischen Druckplatten (1, 2) angeordneten und von den Druckplatten (1, 2) durch Pressung elastisch verformbaren Dichtelement (3), wobei die Druckplatten (1, 2) und das Dichtelement (3) Durchführungen (41, 42) aufweisen,
**dadurch gekennzeichnet,** daß
die Zentriereinrichtung eine in den Rohr-Dichtungseinsatz fest integrierte, im wesentlichen parallel zu den Druckplatten (1, 2) angeordnete und mit einer Durchführung (43) versehene Stützplatte (5) ist.

2. Rohr-Dichtungseinsatz nach Anspruch 1, gekennzeichnet durch zwei Druckplatten (1, 2) wobei die Druckplatten (1, 2), das Dichtelement (3) und die Stützplatte (5) als Scheiben ausgebildet sind, die als Durchführungen zentrische Bohrungen (41-43) aufweisen, und wobei
der äußere Durchmesser der Stützplatte (5) gleich groß wie oder nur geringfügig kleiner als der Durchmesser des Dichtelements (3) ist, und/oder
der Durchmesser der Bohrung (43) der Stützplatte (5) gleich groß wie oder nur geringfügig kleiner oder grösser als der Durchmesser der Bohrung (42) des Dichtelements (3) ist.

3. Rohr-Dichtungseinsatz nach Anspruch 2, dadurch gekennzeichnet, daß das Dichtelement (3) in zwei Halb-Dichtelemente (31, 32) geteilt und die Stützplatte zwischen den Halb-Dichtelementen (31, 32) angeordnet ist.

4. Rohr-Dichtungseinsatz nach Anspruch 2, dadurch gekennzeichnet, daß die Stützplatte (5) zwischen dem Dichtelement (3) und einer Druckplatte (2) angeordnet ist.

5. Rohr-Dichtungseinsatz nach Anspruch 4, dadurch gekennzeichnet, daß die Stützplatte (5) mit der einen Druckplatte (2) einstückig verbunden ist.

6. Rohr-Dichtungseinsatz nach Anspruch 2, dadurch gekennzeichnet, daß das Dichtelement (3) zwischen einer Druckplatte (1) und der Stützplatte (2+5) angeordnet ist, wobei die Stützplatte (2+5) die Funktion der anderen Druckplatte (2) übernimmt.

7. Rohr-Dichtungseinsatz nach einem der vorhergehenden Ansprüche, dadurch gekennzeichnet, daß das elastisch verformbare Dichtelement (3) aus einem elastomeren Kunststoff besteht.
